# EUROPÄISCHE PATENTSCHRIFT

(11) **EP 3 324 085 B1**
(45) Veröffentlichungstag und Bekanntmachung des Hinweises auf die Patenterteilung: **20.05.2020**
(21) Anmeldenummer: 17198594.8
(22) Anmeldetag: 26.10.2017
(51) Int. Cl.: F16K 11/22, F16K 27/00, F16K 27/02

(54) **RING-BLOCK MEMBRANVENTIL**
RING BLOCK DIAPHRAGM VALVE
VANNE À MEMBRANE DU BLOC ANNULAIRE

(30) Priorität: 18.11.2016 DE 102016122219
(43) Veröffentlichungstag der Anmeldung: 23.05.2018
(73) Patentinhaber: SISTO Armaturen S.A., 6468 Echternach (LU)
(72) Erfinder: Hackenberger, Bernd, 6468 Echternach (LU)
(74) Vertreter: Graf, Hans

(56) Entgegenhaltungen:
- WO-A1-2005/033565
- CA-A1- 2 724 302
- DE-A1- 19 832 162
- US-A- 4 350 181

## Beschreibung

Die Erfindung betrifft eine Anordnung für ein Ring-Block Membranventil mit einem Gehäuseblock, der mindestens drei Anschlüsse aufweist, wobei mindestens ein Anschluss mit jeweils einer Absperreinrichtung in Verbindung steht, die einen Sitz für einen Absperrkörper aufweist, zur Trennung eines anschlussseitigen Raums von einem Ringkanal, der alle Absperreinrichtungen miteinander verbindet.

Eine solche Anordnung kommt beispielsweise in der sterilen Verfahrenstechnik zum Einsatz. Pharmazeutische Anlagen und Fertigungsprozesse unterliegen den hohen Ansprüchen einer strengen Validierung, mit dem Ziel, eine gleichbleibende und reproduzierbare Qualität zu gewährleisten. Aus diesen Ansprüchen resultiert die Notwendigkeit, verschiedenste Prozesse innerhalb einer Anlage fahren zu können. Neben dem eigentlichen Produktionsprozess sind dies in der Regel die Reinigung, Desinfektion und Sterilisation der Anlage. Bei Mehrproduktanlagen, die aus Effizienzgründen zum Einsatz kommen können, erhöht sich dementsprechend diese Prozessvielfalt und damit steigen auch die Anforderungen an die Anlage und die eingesetzten Komponenten.

Die Vielfalt der zu bewältigenden Prozesse und die damit verbundenen Einsatzbedingungen stellen hohe Anforderungen an die jeweiligen Komponenten, wie beispielsweise Armaturen. Schon bei der Entwicklung und Konstruktion sind Reinigbarkeit, Totraumfreiheit, geeignete Werkstoffauswahl und Betriebssicherheit wichtige Kriterien. Auch in der Fertigung muss den hohen Qualitätsstandards Rechnung getragen werden, um beispielsweise die erforderliche Oberflächengüte stets sicherzustellen.

Die erfindungsgemäße Anordnung kann beispielsweise im Rahmen eines Entleersystem zur Anwendung kommen, die der Abführung von Flüssigkeiten aus Behältern dienen. Solche Systeme unterliegen in vielen Fällen sehr strengen Anforderungen an die Sterilität. Dies gilt beispielsweise für die Bereiche der Speicherung und Aufbereitung von Lebensmitteln oder von pharmazeutischen Produkten. Eine wesentliche Bedingung für den Betrieb der solche Produkte aufnehmenden Anlagen ist die ständige Wahrung steriler Verhältnisse in den Anlagenteilen, die mit dem jeweiligen Produkt in Berührung kommen. Um der genannten Bedingung zu genügen, müssen die infrage kommenden Anlageteile regelmäßig gereinigt und sterilisiert werden. Eine vollständige Durchspülung aller mit dem Produkt in Kontakt kommenden Räume muss gewährleistet sein. Toträume müssen möglichst vermieden werden. Für das gesamte Entleersystem, zu dem auch am Behälter befindliche Entleerventile gehören, gilt darüber hinaus, dass sackartige Räume vermieden werden, in denen sich Restmengen des Produkts bei einem Ablassvorgang aus dem Behälter ansammeln können.

Bei der Reinigung eines Entleersystems kann ein erhöhter Arbeitsaufwand dadurch entstehen, dass das Entleerventil erst durch eine Demontage der angeschlossenen Anlagen-Rohrleitungen zugänglich wird. Nach Trennung des Entleerventils von der Anlagen-Rohrleitung ergeben sich noch weitere Montage- und Demontagearbeiten, beispielsweise für das Anschließen einer Spülmittelleitung und einer, ein Sterilisationsmittel, beispielsweise Reindampf, führenden Leitung. Nach dem Reinigen und Sterilisieren des Entleerventils ist schließlich noch die Anlagen-Rohrleitung zu montieren und auf dichten Anschluss zu überprüfen.

In der DE 196 11 292 A1 wird ein Ventilmodul für einen Behälter beschriebenen, mit einem Entleerventil und mehreren, dem Entleerventil nachgeschalteten, einzeln zu betätigenden Absperreinrichtungen. Der Auslass des Entleerventils und die Absperreinrichtungen der nachgeschalteten Anschlüsse sind über eine Ringleitung verbunden. Der über die Ringleitung verlaufende Verbindungsweg ist unabhängig von der Stellung des Entleerventils und der Absperreinrichtungen stets offen.

Eine solche Ringkonstruktion aus mehreren einzelnen Armaturen, die über Leitungen miteinander verbunden sind, nimmt einen sehr großen Raum ein und ist verhältnismäßig kostspielig. Weiterhin erfordern derartige Systeme einen hohen Montage- und Wartungsaufwand. Solche Systeme werden auch als Ventilringe bezeichnet. Dabei werden mehrere einzelne Ventile, beispielsweise Membranventile, über Rohrleitungen zu einem Ventilring verbunden.

Um komplexe Lösungen in verfahrenstechnischen Anlagen zu realisieren, kommen als Alternative zu den Ventilringen häufig Mehrwege-Ventilblöcke zum Einsatz. Gegenüber Schweißkonstruktionen sind diese Blöcke totraumoptimiert und platzsparend. In der DE 198 32 162 A1 wird ein Ventilblock mit mehreren zuführenden und abgehenden Anschlüssen beschrieben. Der Ventilblock weist ein Gehäuse auf, das mit einer zentrischen Bohrung versehen ist. Ausgehend von der zentrischen Bohrung ist ein Ringkanal durch spanende Formgebung in das Gehäuse eingebracht. Nach der Einbringung des Ringkanals wird ein Stopfen in die Bohrung des Gehäuses so eingesetzt, dass der Ringkanal zur Bohrung hin vollkommen geschlossen wird. Durch Schweißnähte erhält der Stopfen einen unverrückbaren und dichten Sitz innerhalb der Bohrung.

Die Fertigung eines solchen herkömmlichen Ventilblocks mit einem separaten Stopfen, der in eine Bohrung eingesetzt wird, ist verhältnismäßig aufwendig. Weiterhin stellen die Schweißnähte problematische Stellen in der sterilen Verfahrenstechnik dar. An unebenen oder rauen Oberflächen besteht die Gefahr, dass sich Äste des Produkts festsetzen und es zu einer Kontamination kommen kann.

Die WO 2005/033565 A1 zeigt eine Verteilervorrichtung für Ventile.

Die US 4,350181 zeigt eine Kupplung von Ventilen, bestehend aus mehreren Komponenten.

Die CA 2 724 302 zeigt eine Anordnung zum Mischen, bei der Ventile beteiligt sind.

Die DE 10 2013 002 242 A1 beschreibt ein Ventilgehäuse, das drei Ports aufweist. Zur Steuerung von Fluidströmen zwischen den Ports sind Ventilsitze vorgesehen. Zwischen den Ventilsitzen ist ein Ventilinnenraum vorhanden, welcher zerspanungstechnisch nicht herstellbar ist. Die beiden Ventilsitze bilden dabei Hinterschnitte, durch welche nicht der gesamte Ventilinnenraum durch spanabtragende Werkzeuge erreichbar ist. Ein Ventilsitz dient der Ansteuerung des Fluidstroms von einem Port zum Ventilinnenraum. Der andere Ventilsitz dient der Fluidsteuerung von dem anderen Port zum Ventilinnenraum. In der DE 10 2013 002 242 A1 wird ein Verfahren zur Herstellung eines von einem Medium durch- oder umströmbaren Bauteils beschrieben. Das Bauteil wird durch gezieltes Aufschmelzen eines pulverförmigen oder flüssigen Rohmaterials durch einen Laserstrahl hergestellt.

Aufgabe der Erfindung ist es, eine Anordnung zur Verfügung zu stellen, vorzugsweise ein Ventilblock, der Toträume möglichst vermeidet und so gefertigt ist, dass er in der sterilen Verfahrenstechnik zum Einsatz kommen kann, ohne dass es Bereiche gibt, in denen sich ein Produkt festsetzen kann. Die Anordnung soll möglichst preiswertig zu fertigen sein und eine hohe Lebensdauer aufweisen. Weiterhin soll sich die Anordnung dadurch auszeichnen, dass unterschiedlich viele Anschlüsse daran vorgesehen werden können. Weiterhin soll sich die Anordnung durch eine kompakte Bauweise und einen möglichst geringen Wartungsaufwand auszeichnen.

Diese Aufgabe wird erfindungsgemäß durch eine Anordnung mit den Merkmalen des Anspruchs 1 gelöst. Bevorzugte Varianten sind den Unteransprüchen, der Beschreibung und den Zeichnungen zu entnehmen.

Erfindungsgemäß weist die Anordnung einen Ringkanal auf, der vollständig in einem Gehäuseblock ausgebildet ist. Somit ist bei dieser Konstruktion zur Bildung des Ringkanals kein Stopfen mehr erforderlich. Der Ringkanal ist bereits ohne Stopfen vollständig geschlossen und er läuft innerhalb des Gehäuseblocks der Anordnung.

Es ist dabei der Gehäuseblock einstückig ausgebildet, wobei sich insbesondere ein metallisches Material, vorzugsweise ein nichtrostender Stahl, eignet. Die erfindungsgemäße Konstruktion hat den Vorteil, dass keine Schweißnähte erforderlich sind, um den Ringkanal mittels eines Stopfens zu schließen. Somit entfallen problematische Oberflächen, an denen sich das Produkt festsetzen kann und dadurch die Sterilität nicht mehr gewährleistet ist.

Bei einer besonders vorteilhaften Variante der Erfindung weist der Gehäuseblock in seiner Mitte einen Hohlraum auf. Vorzugsweise ist dabei der Ringkanal um den Hohlraum im Gehäuseblock angeordnet. Bei dem Hohlraum kann es sich beispielsweise um eine zylinderförmige Aussparung handeln, beispielsweise auch eine Bohrung.

Bei der erfindungsgemäßen Konstruktion werden alle Wände, die den Ringkanal begrenzen, von dem einstückigen Gehäuseblock gebildet. Das heißt, es ist kein separates Bauteil, wie beispielsweise ein Stopfen erforderlich, um den Ringkanal zu begrenzen. Ein Hohlraum im Gehäuseblock weist den Vorteil auf, dass der Ventilblock deutlich leichter ist. Zudem führt die Materialersparnis auch zu einer Kostenreduktion bei der Herstellung der Anordnung.

Bei einer besonders vorteilhaften Variante der Erfindung sind die Absperrkörper der Absperreinrichtungen als Membranelemente ausgebildet. Dadurch bilden die Absperreinrichtungen Membranventile. Diese Konstruktion verhindert wirksam Ablagerungen und Kontaminationen. Ventile auf Basis des Membranventils sind besonders totraumarme Armaturen. Neben dem sehr geringen Totraumvolumen zeichnen sich solche Membranventile zudem dadurch aus, dass sie entleerungsoptimiert konstruiert sind, sodass eine rückstandsfreie Entfernung des Mediums ermöglicht wird. Dies ist insbesondere bei pharmazeutischen Anlagen und Fertigungsprozessen von großer Bedeutung.

Vorzugsweise ist der Ringkanal stets offen und verbindet sämtliche Absperreinrichtungen der Anordnung miteinander.

Da die Struktur der erfindungsgemäßen Anordnung im Wesentlichen durch den allen Anschlüssen gemeinsamen Ringkanal und die an der Außenseite angeordneten Absperreinrichtungen bestimmt wird, ergibt sich ein unkomplizierter Aufbau, der die Möglichkeit einer unterschiedlichen Anzahl von Anschlüssen mit beliebiger Nutzung bietet. Mit einer wachsenden Anzahl von Anschlüssen vergrößert sich zwar der Durchmesser des Gehäuses, der grundsätzlich unkomplizierte Aufbau bleibt aber erhalten.

Die Position der Absperreinrichtungen innerhalb des Gehäuseblocks und die Möglichkeit, den mit dem Absperrkörper zusammenwirkenden Sitz oberhalb oder unterhalb des Ringkanals anzuordnen, also den mit dem Anschluss verbundenen Raum der Sperreinrichtung frei zu wählen, führt dazu, dass die Anschlüsse vorzugsweise mit parallel zur Achse des Gehäuseblocks verlaufender Richtung an beiden Stirnseiten des Gehäuses münden. Dies wiederum hat zur Folge, dass die Anordnung und ihre Anschlüsse sehr kompakt sind und nur wenig Raum in Anspruch nehmen.

Vorzugsweise weist jede Absperreinrichtung einen Ventileinsatz auf. Der Ventileinsatz umfasst ein Membranelement, das eine Membran aufweist, die über ein stiftartiges Element verformbar ist. Das stiftartige Element kann beispielsweise als Membranschraube ausgebildet sein. Das stiftartige Element steht mit einem Antrieb zur Verformung der Membran in Verbindung. Dadurch kann die Membran auf dem Sitz der jeweiligen Absperreinrichtung aufliegen und somit den Durchfluss verschließen oder sie kann nach außen gewölbt sein und somit den Durchfluss freigeben.

Vorzugsweise ist der Querschnitt des Ringkanals kleiner als der Querschnitt der in den Gehäuseblock mündenden Anschlüsse. Die Strömung teilt sich auf die beiden durch den Kanal vorgegebenen Richtungen auf. Somit wird bei jedem Strömungsvorgang der gesamte Ringkanal erfasst. Eine Kurzschlussströmung zwischen zwei benachbarten Anschlüssen, die die übrigen Bereiche des Ringkanals weitgehend unberührt ließe, wird somit vermieden.

Der Gehäuseblock weist mindestens drei Anschlüsse auf. Vorzugsweise stehen mindestens zwei Anschlüsse der Anordnung mit jeweils einer Absperreinrichtung in Verbindung. Bei einer besonders günstigen Variante der Erfindung steht jeder Anschluss der Anordnung mit jeweils einer Absperrvorrichtung in Verbindung.

Bei einer besonders vorteilhaften Ausgestaltung der Erfindung sind die Anschlüsse an den Stirnseiten des Gehäuseblocks angeordnet.

Weitere Merkmale und Vorteile der Erfindung ergeben sich aus der Beschreibung von Ausführungsbeispielen anhand von Zeichnungen und aus den Zeichnungen selbst.

Dabei zeigt:
- Figur 1: eine perspektivische, teilweise geöffnete Darstellung eines Gehäuseblocks einer Anordnung mit acht Absperreinrichtungen von oben,
- Figur 2: die Anordnung gemäß der Darstellung in Figur 1 perspektivisch von unten in geschlossener Form,
- Figur 3: eine perspektivische geschnittene Darstellung eines Gehäuseblocks für eine Anordnung mit vier Absperreinrichtungen von unten,
- Figur 4: der in Figur 3 dargestellte Gehäuseblock in perspektivischer Ansicht von oben in geschlossener Form,
- Figur 5: eine Draufsicht einer Anordnung mit vier Absperreinrichtungen,
- Figur 6: eine Schnittdarstellung eines Ausschnitts eines Ventileinsatzes einer Absperreinrichtung.

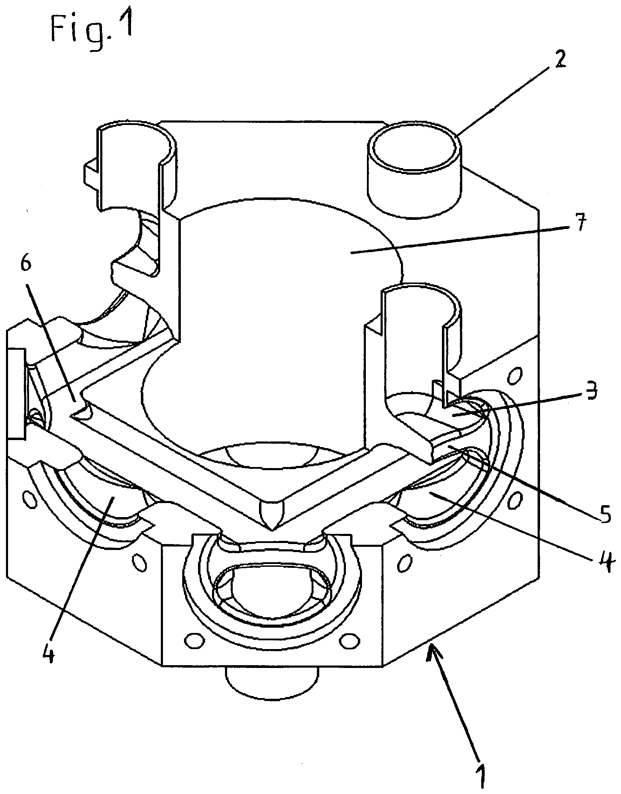

Figur 1 zeigt einen einstückig ausgebildeten Gehäuseblock 1 einer Anordnung zum Schalten von Luftströmen. Das einstückig Gehäuseblock 1 besteht im Ausführungsbeispiel aus einem rostfreien Stahl. Bei der in Figur 1 dargestellten Variante weist der Gehäuseblock insgesamt acht Anschlüsse auf, vier an der oberen Stirnseite und vier an der unteren Stirnseite. Bei der Darstellung gemäß Figur 1 sind drei Anschlüsse an der oberen Stirnseite zu erkennen und ein Anschluss 2 an der unteren Stirnseite. Die Anschlüsse 2 sind als hohlzylinderförmige Rohrabschnitte am Gehäuseblock 1 ausgebildet. Die Anschlüsse 2 können mit Rohrleitungen verbunden werden, die in Figur 1 nicht dargestellt sind.

Jeder Anschluss 2 mündet in einen Raum 3, der im Gehäuseblock 1 ausgebildet ist. Die Räume 3 sind von Räumen 4 durch einen Ventilsitz 5 getrennt, der im Ausführungsbeispiel als Steg ausgebildet ist. Der Ventilsitz 5 wird auch gelegentlich als Wehr bezeichnet. Der Ventilsitz 5 ist Teil einer Absperreinrichtung, die in Figur 1 nicht dargestellt ist. Der Ventilsitz 5 wirkt mit einem Absperrkörper zusammen, der ebenfalls in Figur 1 nicht gezeigt ist.

Alle Räume 4 der Anordnung sind mit einem Ringkanal 6 verbunden. Erfindungsgemäß ist der Ringkanal 6 vollständig im Gehäuseblock 1 ausgebildet.

Bei der in Figur 1 dargestellten 8-Sitz-Anordnung weist der Ringkanal 6 mehrere gerade Abschnitte auf, die durch Eckabschnitte miteinander verbunden werden. Der Ringkanal 6 ist stets offen und verbindet immer alle Räume 4 der jeweiligen Absperreinrichtung.

Bei der in Figur 1 dargestellten Variante weist der Gehäuseblock 1 einen zylinderförmigen Hohlraum 7 in der Mitte des Gehäuseblocks 1 auf, der sich von Stirnseite zu Stirnseite erstreckt. Der zylinderförmige Hohlraum 7 kann als Bohrung in dem Gehäuseblock 3 eingebracht werden oder er kann bereits bei der Herstellung des einstückig ausgebildeten Gehäuseblocks 1 erzeugt werden.

Bei der in Figur 1 dargestellten Variante ist der Ringkanal 6 vollständig im Gehäuseblock um den Hohlraum 7 ausgebildet.

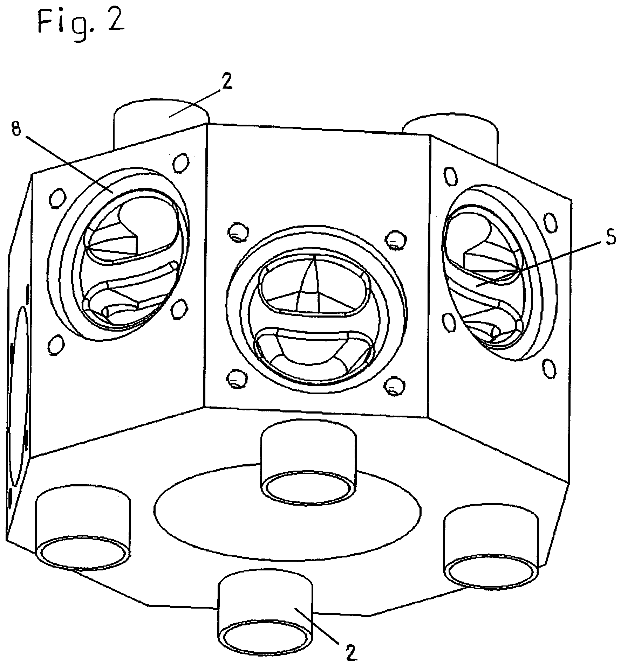

Figur 2 zeigt eine perspektivische Darstellung der in Figur 1 gezeigten Anordnung von unten. Bei der Anordnung gemäß Figur 2 erkennt man vier der acht Anschlüsse an der unteren Stirnseite und zwei der acht Anschlüsse 2 an der oberen Stirnseite. Weiterhin zeigt die Darstellung gemäß Figur 2, dass der Hohlraum 7 zylinderförmig ausgebildet ist und sich von Stirnseite zu Stirnseite des Gehäuseblocks 1 erstreckt.

Man erkennt an den seitlichen Mantelflächen der Anordnung kreisförmige Nuten 8, die im Gehäuseblock 1 eingebracht sind, welche als Dichtflächen für die als Membranelemente ausgebildeten Absperrkörper dienen. Weiterhin erkennt man die Sitze 5 der jeweiligen Absperreinrichtung, die sich als Stege zwischen den ringförmig ausgebildeten Routen erstrecken.

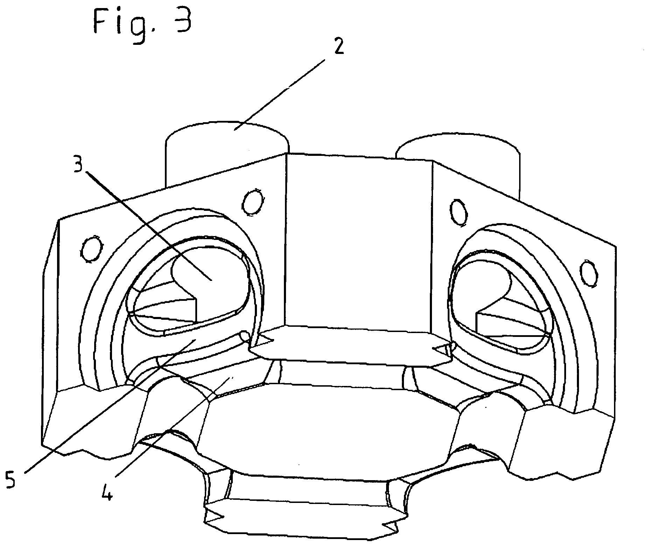

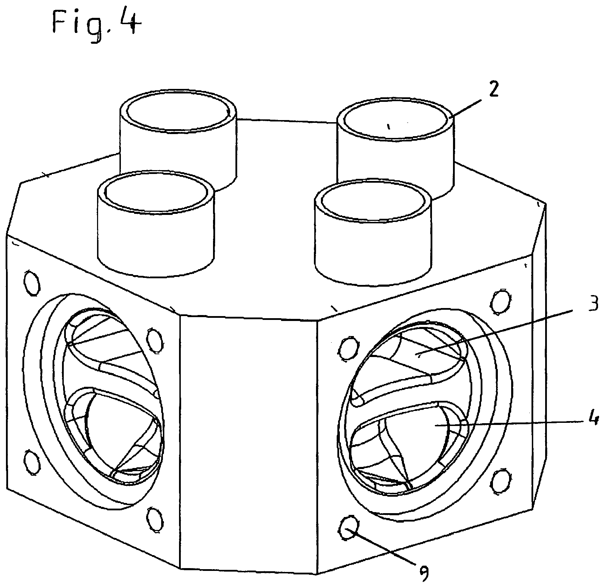

Figur 3 zeigt einen einstückig ausgebildeten Gehäuseblock 1 einer Anordnung mit vier Sperreinrichtungen. Die Anschlüsse 2 sind mit Blick auf die Zeichnung an der oberen Stirnseite des Gehäuseblocks 1 angeordnet und münden jeweils in einen Raum 3. Der Raum 3 ist von einem Raum 4 durch einen als Steg ausgebildeten Ventilsitz 5 getrennt, der mit einem Absperrkörper zusammenwirkt, welcher in Figur 3 nicht dargestellt ist. Alle Räume 4 sind Teil des Ringkanals 6, der alle Absperreinrichtungen miteinander verbindet und ständig offen ist. Figur 4 zeigt eine perspektivische Darstellung des Gehäuseblocks 1 von der Zeichnung gemäß Figur 3 von oben. Der Gehäuseblock 1 gemäß der Darstellung in Figur 4 ist als achteckiger Körper ausgebildet und weist an seinen seitlichen Mantelflächen Bohrungen 9 auf zur Befestigung der jeweiligen Absperreinrichtung.

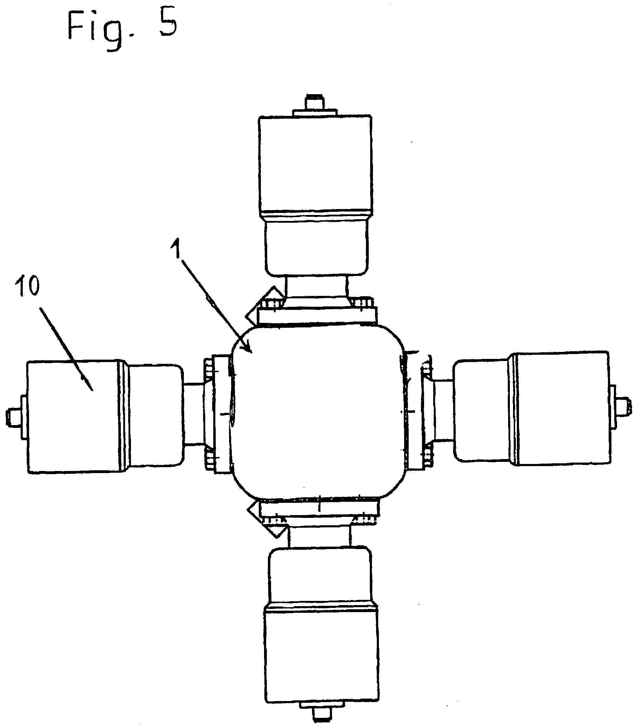

Figur 5 zeigt eine Draufsicht auf eine Anordnung mit insgesamt drei Absperreinrichtungen, wobei jeder Absperreinrichtung ein Antrieb 10 zugeordnet ist.

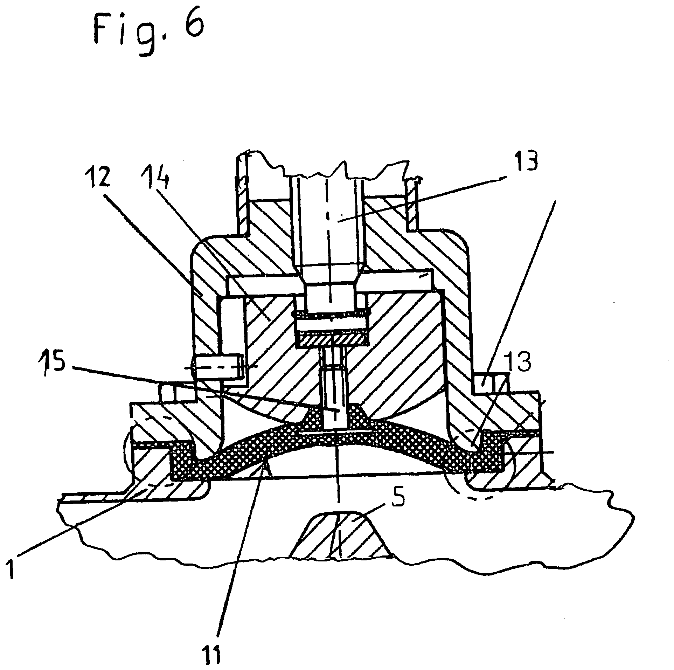

Figur 6 zeigt eine Schnittdarstellung eines Abschnitts einer Absperreinrichtung. Die Absperreinrichtung weist einen Absperrkörper 11 auf, der im Ausführungsbeispiel als Membranelement ausgebildet ist. Der als Membranelement ausgebildete Absperrkörper 11 wirkt mit dem Sitz 5 der Absperreinrichtung zusammen. Der als Membranelement ausgebildete Absperrkörper 11 ist zwischen dem Gehäuseblock 1 und einem Gehäuseoberteil 12 eingespannt. Im Gehäuseoberteil 12 sind die zur Betätigung des Absperrkörpers notwendigen Elemente integriert, wie beispielsweise ein Antrieb, der mit einer Spindel 13 zusammenwirkt. An der Spindel 13 ist ein Druckstück 14 befestigt. Das Druckstück 14 ist verschieblich im Gehäuseoberteil 12 angeordnet und wird von einer inneren Wand des Gehäuseteils 12 geführt. Durch Betätigung des Antriebs wird über die Spindel 13 eine horizontale Verschiebung des Druckstücks 14 bewirkt, sodass sich der als Membranelement ausgeführte Absperrkörper 11 verformt und der Querschnitt zwischen dem Sitz (Wehr) und dem als Membranelement ausgeführten Absperrkörper 11 vergrößert bzw. verkleinert wird.

Der als Membranelement ausgeführte Absperrkörper 11 umfasst ein stiftartiges Element 15. Das stiftartige Element 15 ist in die Membran eingebettet und ist im Ausführungsbeispiel als Membranschraube ausgebildet. Das stiftartige Element 15 steht mit dem Antrieb entweder mittelbar oder unmittelbar in Verbindung.

## Patentansprüche

1. Ring-Block Membranventil mit einem Gehäuseblock (1), der mindestens drei Anschlüsse (2) aufweist, wobei mindestens ein Anschluss (2) mit jeweils einer Absperreinrichtung in Verbindung steht, die einen Sitz (5) für einen Absperrkörper (11) aufweist zur Trennung eines anschlussseitigen Raums (3) von einem Ringkanal (6), wobei der Ringkanal (6) alle Absperreinrichtungen miteinander verbindet,
wobei der Ringkanal (6) vollständig im Gehäuseblock (1) ausgebildet ist, wobei alle Wände, die den Ringkanal (6) begrenzen, von dem einstückigen Gehäuseblock (1) gebildet werden, **dadurch gekennzeichnet, dass** der Ringkanal (6) mehrere gerade Abschnitte aufweist, die durch Eckabschnitte miteinander verbunden werden.

2. Anordnung nach Anspruch 1, **dadurch gekennzeichnet, dass** der Ringkanal (6) um einen Hohlraum (7) im Gehäuseblock (1) angeordnet ist.

3. Anordnung nach einem der Ansprüche 1 oder 2, **dadurch gekennzeichnet, dass** der Absperrkörper (11) als Membranelement ausgebildet ist.

4. Anordnung nach einem der Ansprüche 1 bis 3, **dadurch gekennzeichnet, dass** der Ringkanal (6) stets offen ist.

5. Anordnung nach einem der Ansprüche 1 bis 4, **dadurch gekennzeichnet, dass** jede Absperreinrichtung einen Ventileinsatz aufweist.

6. Anordnung nach einem der Ansprüche 1 bis 5, **dadurch gekennzeichnet, dass** jede Absperreinrichtung einen Antrieb (10) aufweist.

7. Anordnung nach einem der Ansprüche 1 bis 6, **dadurch gekennzeichnet, dass** der Querschnitt des Ringkanals (6) kleiner ist als der Querschnitt der Anschlüsse (2).

8. Anordnung nach einem der Ansprüche 1 bis 7, **dadurch gekennzeichnet, dass** die Anschlüsse (2) an den Stirnseiten des Gehäuseblocks (1) angeordnet sind.

9. Anordnung nach einem der Ansprüche 1 bis 8, **dadurch gekennzeichnet, dass** jeder Anschluss (2) mit jeweils einer Absperreinrichtung in Verbindung steht.

## Claims

1. Ring block diaphragm valve having a housing block (1), which has at least three ports (2), wherein at least one port (2) is connected to in each case one shut-off device, which has a seat (5) for a shut-off body (11) for separating a port-side space (3) from an annular channel (6), wherein the annular channel (6) connects all the shut-off devices together, wherein the annular channel (6) is formed entirely in the housing block (1), wherein all the walls that bound the annular channel (6) are formed by the one-piece housing block (1), **characterized in that** the annular channel (6) has a plurality of straight sections that are connected together by corner sections.

2. Arrangement according to Claim 1, **characterized in that** the annular channel (6) is arranged around a cavity (7) in the housing block (1).

3. Arrangement according to either of Claims 1 and 2, **characterized in that** the shut-off body (11) is in the form of a diaphragm element.

4. Arrangement according to one of Claims 1 to 3, **characterized in that** the annular channel (6) is always open.

5. Arrangement according to one of Claims 1 to 4, **characterized in that** each shut-off device has a valve insert.

6. Arrangement according to one of Claims 1 to 5, **characterized in that** each shut-off device has a drive (10).

7. Arrangement according to one of Claims 1 to 6, **characterized in that** the cross section of the annular channel (6) is smaller than the cross section of the ports (2).

8. Arrangement according to one of Claims 1 to 7, **characterized in that** the ports (2) are arranged on the front faces of the housing block (1).

9. Arrangement according to one of Claims 1 to 8, **characterized in that** each port (2) is connected to in each case one shut-off device.

## Revendications

1. Vanne à membrane du bloc annulaire avec un bloc-carter (1) comportant au moins trois bornes (2), au moins une borne (2) étant reliée à respectivement un dispositif de verrouillage comportant un siège (5) pour un corps de déverrouillage (11), pour la séparation d'une chambre (3) du côté de borne depuis un canal annulaire (6), le canal annulaire (6) reliant entre eux tous les dispositifs de verrouillage, le canal annulaire (6) étant entièrement réalisé dans le bloc-carter (1), toutes les parois délimitant le canal annulaire (6) étant formées par le bloc-carter (1) réalisé d'un seul tenant, **caractérisé en ce que** le canal annulaire (6) comporte plusieurs sections droites reliées entre elles par des sections d'angle.

2. Agencement selon la revendication 1, **caractérisé en ce que** le canal annulaire (6) est disposé autour d'un espace creux (7) dans le bloc-carter (1).

3. Agencement selon l'une quelconque des revendications 1 ou 2, **caractérisé en ce que** le corps de déverrouillage (11) est réalisé sous la forme d'un élément à membrane.

4. Agencement selon l'une quelconque des revendications 1 à 3, **caractérisé en ce que** le canal annulaire (6) est en permanence ouvert.

5. Agencement selon l'une quelconque des revendications 1 à 4, **caractérisé en ce que** chaque dispositif de verrouillage comporte un mécanisme de valve.

6. Agencement selon l'une quelconque des revendications 1 à 5, **caractérisé en ce que** chaque dispositif de verrouillage comporte un entraînement (10).

7. Agencement selon l'une quelconque des revendications 1 à 6, **caractérisé en ce que** la section transversale du canal annulaire (6) est inférieure à la section transversale des bornes (2).

8. Agencement selon l'une quelconque des revendications 1 à 7, **caractérisé en ce que** les bornes (2) sont disposées au niveau des côtés avant du bloc-carter (1).

9. Agencement selon l'une quelconque des revendications 1 à 8, **caractérisé en ce que** chaque borne (2) est respectivement reliée à un dispositif de verrouillage.
